# EUROPÄISCHE PATENTSCHRIFT

(11) **EP 1 984 475 B1**
(45) Veröffentlichungstag und Bekanntmachung des Hinweises auf die Patenterteilung: **12.06.2013**
(21) Anmeldenummer: 06818068.6
(22) Anmeldetag: 12.11.2006
(51) Int. Cl.: C10G 1/02, C10G 1/08, C10B 47/30

(54) **VERFAHREN ZUR KONVERSION ORGANISCHER SEKUNDÄRROHSTOFFE ZU ÖLNEBEL ALS BASIS FÜR INSBESONDERE KRAFTSTOFFE UND VORRICHTUNG ZUR DURCHFÜHRUNG DES VERFAHRENS SOWIE KRAFTSTOFFE**
METHOD FOR CONVERTING ORGANIC SECONDARY RAW MATERIALS INTO ATOMISED FUEL OIL AS A BASE FOR ESPECIALLY FUELS, DEVICE FOR CARRYING OUT THE METHOD, AND CORRESPONDING FUELS
PROCEDE DE CONVERSION DE SUBSTANCES BRUTES SECONDAIRES ORGANIQUES EN VAPEUR D'HUILE COMME BASE, PRINCIPALEMENT POUR DES CARBURANTS, ET DISPOSITIF POUR LA MISE EN OEUVRE DE CE PROCEDE, ET CARBURANTS CORRESPONDANTS

(30) Priorität: 21.11.2005 DE 102005055784; 01.12.2005 DE 102005057653
(43) Veröffentlichungstag der Anmeldung: 29.10.2008
(73) Patentinhaber: VIET Holding AG, 6340 Baar (CH)
(72) Erfinder: Winkelkötter, Peter, 85646 Anzing (DE)
(74) Vertreter: Becker, Eberhard
(86) Internationale Anmeldenummer: PCT/DE2006/001979
(87) Internationale Veröffentlichungsnummer: WO 2007/056982

(56) Entgegenhaltungen:
- DE-A1- 10 021 383
- US-A1- 2002 072 641
- US-B1- 6 270 630

## Beschreibung

Die Erfindung betrifft ein Verfahren zur Konversion organisher Sekundärohstoffe zu Ölnebel als Basis für insbesondere Kraftstoffe und eine Vorrichtung zur Durchführung eines solchen Verühres. Ein solches Verfahren und eine solche Vorrichtung sind bereits aus der DE 100 21 383 A1 bekannt. Bei dem bekannten Verfahren und der bekannten Vorrichtung werden die organischen Sekundärrohstoffe mittels Pyrolyse bei 450 - 480° Celsius konvertiert. Bei temperaturen über 420° Celsius entstehen aber Dioxine, so dass diese Methode, bzw. eine solche Vorrichtung einen Nachteil aufweisen.

Im Stand der Technik sind Konversionsverfahren für organische Sekundärrohstoffe bekannt.

Die US 6,270,630 B1 betrifft ein Verfahren und eine Vorrichtung zur Konversion organischer Sekundärrohstoffe zu Ölnebel mittels eines zweistufigen Cracking-Prozesses. Das erste Cracking bzw. die erste Verfahrensstufe findet in einem sich drehenden Reaktor statt. Einem katalytischen Cracking an einem Festbettkatalysator werden, wenn überhaupt, ausschließlich abgetrennte, gasförmige Reaktionsprodukte unterworfen.

Die US 2002/0072641 A1 betrifft ebenfalls ein Verfahren und eine Vorrichtung zur Konversion organischer Sekundärrohstoffe zu Ölnebel. Die Konversion erfolgt in einem stationären Reaktor unter Vakuum und unter Einsatz eines Katalysators.

Aufgabe der vorliegenden Erfindung ist es, Nachteile im Stand der Technik zu vermeiden.

Diese Aufgabe wird durch das Verfahren nach Anspruch 1 bzw. die Vorrichtung nach Anspruch 6 gelöst.

Gemäß einem ersten Aspekt der vorliegenden Erfindung wird ein Verfahren zur Konversion organischer Sekundärrohstoffe zu Ölnebel als Basis für insbesondere Kraftstoffe bereitgestellt. Die Konversion erfolgt durch katalytische Depolymerisation bei 320 - 380° Celsius unter Sauerstoffabschluss. Der für die katalytische Depolymerisation verwendete Katalysator ist ein Aluminium-Silikatpulver. Die Konversion erfolgt in einem Konversionsraum einer durch Abgase einer Wärmekraftmaschine beheizten Trommel, deren Innenseite aus einer hochtemperaturfesten, hochsäurefesten, hochabriebfesten Legierung, wie z.B. Hastelloy, besteht und welche langsam rotiert. Die Trommel weist eine Eintrittsöffnung und eine Auslassöffnung auf. Die Trommel weist ferner zwei weitere Öffnungen und eine Einrichtung auf, durch welche die Abgase der Wärmekraftmaschine, z.B. einer Gasturbine, zur Heizung durch die Trommel geleitet werden, ohne dass die Abgase in den Konversionsraum der Trommel gelangen. Das Aluminium-Silikatpulver wird zusammen mit den organischen Sekundärrohstoffen langsam durch die Trommel transportiert. Das mit Prozessabfällen verunreinigte Aluminium-Silikatpulver wird zusammen mit Prozessöl durch die Auslassöffnung aus der Trommel ausgeleitet und der ausgeleitele Strom in eine Schwertwäsche geleitet, und in der Schwertwäsche durch Prozessöl von Prozessabfällen gereinigt. Das gereinigte Aluminium-Silikatpulver mit Prozessöl wird in die Eintrittsöffnung der Trommel für die Konversion zurückgefördert.

Gemäß einem zweiten Aspekt der vorliegenden Erfindung wird eine Vorrichtung zur Durchführung des erfindungsgemäßen Verfahrens zur Konversion organischer Sekundärrohstoffe zu Ölnebel bereitgestellt. Die Vorrichtung umfasst eine drehbare Trommel mit einem Konversionsraum, die eine Eintrittsöffnung und eine Auslassöffnung aufweist. Eine Innenseite der Trommel besteht aus einer hochtemperaturfesten, hochsäurefesten, hochabriebfesten Legierung, wie z.B. Hastelloy. Die Trommel weist ferner zwei weitere Öffnungen und eine Einrichtung auf, durch welche Abgase einer Wärmekraftmaschine, wie z.B. einer Gasturbine, zur Heizung durch die Trommel geleitet werden können, ohne dass die Abgase in den Konversionsraum der Trommel gelangen. Die Vorrichtung umfasst ferner eine Einrichtung für eine Schwertwäsche , um das mit Prozessabfällen verunreinigte Aluminium-Silikatpulver zusammen mit Prozessöl durch die Auslassöffnung aus der Trommel auszuleiten und um den ausgeleiteten Strom in die Schwertwäsche einzuleiten, in der Schwertwäsche durch Prozessöl von Prozessabfällen zu reinigen, und das gereinigte Aluminium-Silikatpulver zusammen mit Prozessöl durch die Eintrittsöffnung der Trommel für die Konversion zurück zu fördern.

Bevorzugte Ausführungsbeispiele sind in den Unterransprüchen dargestellt.

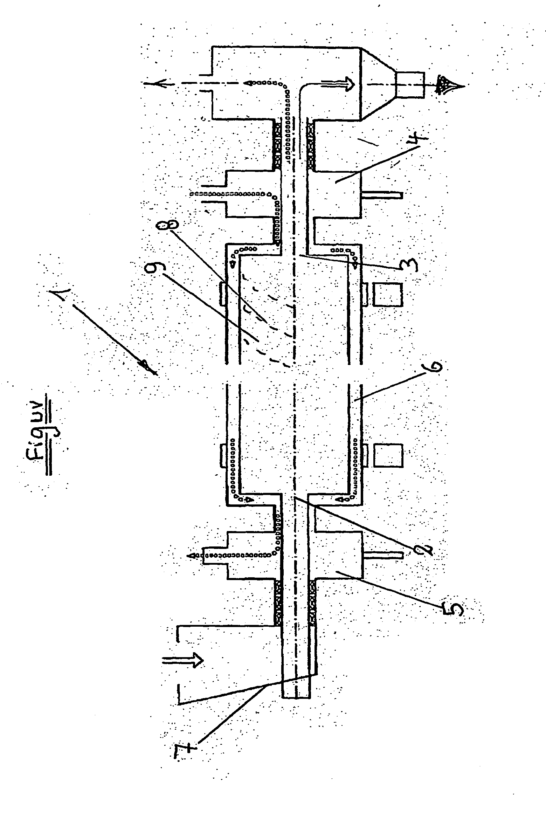

Ein besonders bevorzugtes Ausführungsbeispiel soll anband der Zeichnung erläutert werden, welche eins Konversionstrommel mit Auschlüssen darstellt. Die Konversionstrommel 1 hat zwei innere Nabenanschlüsse 2 und 3, wobei in dem inneren Nabenanschluss 2 eine (nicht dargestellte) Schnecke befindlich ist, deren Umfang mit dem Umfang der Öffnung abschlieβt.

Außerdem sind zwei Öffnungen 4 und 5 zur Durchleitung von Abgasen einer Wärmekraftmaschine wie einer Gasturbine durch die Trommel vorgesehen. Organische Sekundärrohstoffe werden in gegebenenfalls zerkleinerter Form von dem Behälter 7 in die Eintrittsöfnung 2 der Trommel geleitet, so dass sie in die Trommel 1 gelangen.

In der Trommel 1 befinden sich am inneren Umfang insbes. hypoid-geformte spiralisch angeordnete Führungsleisten 9, z.B. Hebe- bzw. Transportleisten, welche befestigt bzw. angeheftet sind. Diese Hebe- bzw. Transportleisten sind in Rotationsrichtung der Trommel leicht gekrümmt und konvex. Diese können vorteilhafterweise in ihrem Verlauf auch Unterbrechungen 8 aufweisen. Sie transportieren die organischen Sekundärrohstoffe zusammen mit dem Katalysator, welcher aus einer Schwertwäsche zusammen mit Prozessöl in die Eintrittsöffnung 2 geleitet wird.

Das Katalysatorpulver und die organischen Rohstoffe wandern nun durch die Trommel, wo bei 320 - 3,80° Celsius die katalytische Umwandlung stattfindet. Ein Anbacken des Katalysatorpulvers an der beheizten Trommel wird durch ein mineralförmiges Additiv verhindert, welches ebenfalls pulverförmig ist.

Der entstehende Ölnebel wird durch die Anslassöfnung 3 zu einer Wärmekrafunaschine bzw. der Gasturbine bzw. zu einer Fraktionierungskolonne geleitet und der mit Prozessabfällen verunreinigte Katalysator wird zusammen mit Prozessöl in die Schwertwäsche geleitet Dies geschieht mit Hilfe eines Schwingschlauches und Schwerkraft. Aus der Schwertwäsche heraus wird das gereinigte Katalysatorpulver mit dem Prozessöl durch einen spiralförmigen Förderer in die Eintrittsöffnung 2 der Trommel zurückgefördert.

Gemäß der Abbildung sind innerhalb der Trommel Rohre 6 angeordnet, durch welche das Abgas strömt. Diese auch als Transportstäbe dienenden Rohre können ebenso wie die Innenseite der Trommel aus Hastelloy^{®} sein. Aus Hastellöy® sind auch die Transport- bzw. Hebeleisten 9. Die Trommel kann auch beheizt werden, indem die Abgase durch einen Zwischenraum eines nicht dargestellten Außenmantels und des Innenmantels geleitet werden, wobei der Außenmantel aus Edelstahl ist.

Die Abgase können auch ebanfälls durch die Profile der Hebe- bzw. Transportleisten 9 geleitet werden, welche vom Konversionsraum abgeschlossen sind. Evt1. eutstehendes Chlorgas wird durch die katalytische Umwandlung zu Salzen verarbeistel, welche zusammen mit dem Katalysator und dem Prozessöl in die Sehwertwäsche gelangen. Dorthin gelangen auch abgesonderte Minerale und Metalle. Der äußere Ausgng 5 ist mit einer Einrichtung zur Gewinnung destillierten Wassers aus Wasserdampf verbunden. Die Öffnung bzw. der Eingang 4 ist mit dem Abgasrohr der Wärmekraftmaschine bzw. der Gasturbine verbunden.

Außerdem kann noch vor dem Nabeneingang 2 in Richtung des ßehälters 7 für Sekundärrohstoffe eine Zellenradschleuse mit ausgeschnittenen drehbaren Scheiben angeordnet sein, wobei, wenn die Zellenradschleuse in Richtung des Behälters 7 geschlossen und in Richtung der inneren Nabenöfnnung 2 offen ist, in der Zellenradschleuse CO₂-Überdruck erzeugt wird.

## Patentansprüche

1. Verfahren zur Konversion organischer Sekundärrohstoffe zu Ölnebel als Basis für insbesondere Kraftstoffe, wobei die Konversion durch katalytische Depolymerisation bei 320 - 380° Celsius unter Sauerstoffabschluss erfolgt und der für die katalytische Depolymerisation verwendete Katalysator ein Aluminium-Silikatpulver ist,
die Konversion in einem Konversionsraum einer durch Abgase einer Wärmekraftmaschine beheizten Trommel (1) erfolgt, deren Innenseite aus einer hochtemperaturfesten, hochsäurefesten, hochabriebfesten Legierung besteht und welche langsam rotiert,
wobei die Trommel (1) eine Eintrittsöffnung (2) und eine Auslassöffnung (3) aufweist,
wobei die Trommel (1) zwei weitere Öffnungen (4, 5) und eine Einrichtung aufweist, durch welche die Abgase der Wärmekraftmaschine zur Heizung durch die Trommel (1) geleitet werden, ohne dass die Abgase in den Konversionsraum der Trommel (1) gelangen,
das Aluminium-Silikatpulver zusammen mit den organischen Sekundärrohstoffen langsam durch die Trommel (1) transportiert wird, und
das mit Prozessabfällen verunreinigte Aluminium-Silikatpulver zusammen mit Prozessöl durch die Auslassöffnung (3) aus der Trommel (1) ausgeleitet und der ausgeleikte Strom in eine Schwertwäsche geleitet wird, in der Schwertwäsche durch Prozessöl von Prozessabfällen gereinigt wird, und das gereinigte Aluminium-Silikatpulver mit Prozessöl in die Eintrittsöffnung (2) der Trommel (1) für die Konversion zurückgefördert wird.

2. Verfahren nach Anspruch 1, wobei ein ein Anbacken des Katalysatorpulvers verhinderndes pulverförmiges Additiv vorliegt.

3. Verfahren nach Anspruch 2, wobei das Additiv ein Mineral ist.

4. Verfahren nach Anspruch 1, wobei die Wärmekraftmaschine eine Gasturbine ist, die einen Generator antreibt, mit den Verfahrensschritten, dass die Gasturbine mit einem durch ein Verfahren nach Anspruch 1 gewonnenen Ölnebel betrieben wird.

5. Verfahren nach Anspruch 4, wobei aus den Abgasen der Gasturbine destilliertes Wasser gewonnen wird.

6. Vorrichtung zur Durchführung eines Verfahrens zur Konversion organischer Sekundärrohstoffe zu Ölnebel nach einem der Ansprüche 1 bis 5,
wobei die Vorrichtung eine drehbare Trommel (1) mit einem Konversionsraum umfasst, die eine Eintrittsöffnung (2) und eine Auslassöffnung (3) aufweist, wobei
eine Innenseite der Trommel (1) aus einer hochtemperaturfesten, hochsäurefesten, hochabriebfesten Legierung besteht,
wobei die Trommel (1) zwei weitere Öffnungen (4, 5) und eine Einrichtung aufweist, durch welche Abgase einer Wärmekraftmaschine zur Heizung durch die Trommel (1) geleitet werden können, ohne dass die Abgase in den Konversionsraum der Trommel (1) gelangen,
wobei die Vorrichtung ferner eine Einrichtung für eine Schwertwäsche umfasst, um das mit Prozessabfällen verunreinigte Aluminium-Silikatpulver zusammen mit Prozessöl durch die Auslassöffnung (3) aus der Trommel (1) auszuleiten und um den ausgeleitelen Strom in die Schwertwäsche einzuleiten, in der Schwertwäsche durch Prozessöl von Prozessabfällen zu reinigen, und das gereinigte Aluminium-Silikatpulver zusammen mit Prozessöl durch die Eintrittsöffnung (2) der Trommel (1) für die Konversion zurück zu fördern.

7. Vorrichtung nach Anspruch 6, wobei die Eintrittsöffnung (2) und die Auslassöffnung (3) an Naben der Trommel (1) angeordnet sind, wobei die Eintrittsöffnung (2) in die Trommel (1) eine rotierende Schnecke aufweist, deren Umfang mit einem Umfang der Eintrittsöffnung (2) abschließt.

8. Vorrichtung nach Anspruch 6 oder 7, wobei in Rotationsrichtung der Trommel (1) leicht gekrümmte konvexe Transport- bzw. Hebeleisten (9) vorgesehen sind, welche am Innenumfang der Trommel (1) befestigt sind und vorzugsweise Unterbrechungen (8) aufweisen.

9. Vorrichtung nach Anspruch 8, wobei die Transport- bzw. Hebeleisten (9) aus einer hochtemperaturfesten, hochsäurefesten, hochabriebfesten Legierung bestehen.

10. Vorrichtung nach Anspruch 9, **gekennzeichnet durch** eine Anzahl von 24 bis 36 Windungen der Transport- bzw. Hebeleisten (9).

11. Vorrichtung nach einem der Ansprüche 7 bis 10, wobei die Trommel (1) einen Innenmantel und einen Außenmantel mit einem Zwischenraum zwischen dem Innenmantel und dem Außenmantel aufweist, wobei die weiteren Öffnungen (4, 5) zur Durchleitung der Abgase mit dem Zwischenraum in Verbindung stehen.

12. Vorrichtung nach Anspruch 11, wobei der Innenmantel aus einer hochtemperaturfesten, hochsäurefesten, hochabriebfesten Legierung und der Außenmantel aus Edelstahl besteht.

13. Vorrichtung nach einem der Ansprüche 7 bis 10, wobei Rohre vorgesehen sind, welche durch den Innenraum der Trommel (1) verlaufen und mit den zwei weiteren Öffnungen (4, 5) zur Durchleitung der Abgase durch die Rohre in Verbindung stehen.

14. Vorrichtung nach Anspruch 13, wobei die Rohre aus einer hochtemperaturfesten, hochsäurefesten, hochabriebfesten Legierung bestehen.

15. Vorrichtung nach einem der Ansprüche 7 bis 10, wobei die Transport- bzw. Hebeleisten (9) gasdicht vom Innenraum der Trommel (1) abgeschlossene Profile aufweisen und die Profile mit den weiteren Öffnungen (4, 5) zur Durchleitung der Abgase durch die Rohre in Verbindung stehen.

16. Vorrichtung nach einem der Ansprüche 11 bis 15, wobei eine der weiteren Öffnungen (4) zur Durchleitung der Abgase durch die Rohre mit einem Abgasrohr der Wärmekraftmaschine in Verbindung steht.

17. Vorrichtung nach Anspruch 16, wobei die andere der weiteren Öffnungen (5) zur Durchleitung der Abgase durch die Rohre mit einer Einrichtung zur Gewinnung von destilliertem Wasser aus Wasserdampf in Verbindung steht.

18. Vorrichtung nach Anspruch 16 oder 17, wobei der Strömungsquerschnitt eines Verbindungsraumes zwischen den weiteren Öffnungen (4, 5) zur Durchleitung der Abgase durch die Rohre größer als der kleinste Strömungsquerschnitt des Abgasrohrs der Gasturbine ist.

19. Vorrichtung nach einem der Ansprüche 7 bis 18, wobei die Eintrittsöffnung (2) eine innere Nabenöffnung (2) ist, welche die Schnecke aufweist und mit einem Behälter (7) für organische Sekundärrohstoffe in Verbindung steht und die Auslassöffnung (3) eine andere innere Nabenöffnung (3) ist, die mit einer Fraktionierungskolonne und einem Eingang der Gasturbine in Verbindung steht.

20. Vorrichtung nach Anspruch 19, wobei die Schnecke in der Eintrittsöffnung (2) vorgesehen ist, um die organischen Sekundärrohstoffe in die Trommel (1) zu fördern und die Auslassöffnung (3) vorgesehen ist, um den Ölnebel aus der Trommel (1) in die Fraktionierungskolonne und in die Wärmekraftmaschine zu leiten.

21. Vorrichtung nach einem der Ansprüche 7 bis 20, wobei die rotierende Schnecke in der Eintrittsöffnung (2) aus Keramik besteht.

22. Vorrichtung nach einem der Ansprüche 7 bis 20, wobei vor der Eintrittsöffnung (2) in Richtung des Behälters (7) für Sekundärrohstoffe eine Zellenradschleuse angeordnet ist, welche aus zwei rohr-umfassenden drehbaren, mit jeweils einem Ausschnitt versehenen Scheiben besteht, wobei die Scheiben der Zellradschleuse derart vorgesehen sind, dass diejenige Scheibe, welche in Richtung des Behälters (7) angeordnet ist, für die Zuführung von Sekundärrohstoffen ihren Ausschnitt zeigt und anschließend wieder verschließbar ist, und dass die andere Scheibe, welche in Richtung der Eintrittsöffnung angeordnet ist, nachfolgend ihren Ausschnitt zeigt und gleichzeitig in der Zellenradschleuse CO₂-Überdruck erzeugbar ist.

## Claims

1. Method for the conversion of organic recycling products to oil mist, as basis in particular for fuels, wherein the conversion takes place through catalytic depolymerisation at 320 - 380° Celsius and under exclusion of oxygen and the catalyst used for the depolymerisation is a aluminium silicate powder; wherein
the conversion takes place in a conversion chamber of a drum (1) heated by the exhaust of a heat engine, the inner side of the drum (1) consisting of a highly temperature resistant, highly acid resistant, and highly abrasion resistant alloy, and the drum (1) is slowly rotating; wherein
the drum (1) has an inlet opening (2) and an outlet opening (3); wherein
the drum (1) has two further openings (4, 5) and an apparatus through which the exhausts of the heat engine are conducted through the drum (1) for heating without the exhausts entering the conversion chamber of the drum (1), wherein
the aluminium silicate powder is slowly transported through the drum (1) together with the organic recycling products and
the aluminium silicate powder impured with process wastes is diverted out of the drum (1) together with process oil through the outlet opening (3) and wherein the diverted flow is guided into a log washer, is cleaned from process wastes through the process oil in the log washer, and wherein the cleaned aluminium silicate powder is conveyed back into the inlet opening (2) of drum (1) together with process oil for conversion.

2. Method according to claim 1, wherein an additive in powder-form is present which prevents adhering of the catalytic powder.

3. Method according to claim 2, wherein the additive is a mineral.

4. Method according to claim 1, wherein the heat engine is a gas turbine driving a generator comprising the method step that the gas turbine is driven by a oil mist gathered through a method according to claim 1.

5. Method according to claim 4, wherein distilled water is gathered from the exhausts of the gas turbine.

6. Device for performing a method for the conversion of organic recycling products to oil mist according to one of claims 1 to 5, wherein
the device comprises a rotatable drum (1) having a conversion chamber, with an inlet opening (2) and an outlet opening (3), wherein
an inner side of the drum (1) consists of a highly temperature resistant, highly acid resistant, and highly abrasion resistant alloy, wherein
the drum (1) has two further openings (4, 5) and an apparatus through which exhausts of a heat engine can be conducted through the drum (1) for heating without the exhausts entering the conversion chamber of the drum (1), wherein
the device further comprises a log washer apparatus to divert the aluminium silicate powder impured with process wastes out of the drum (1) together with process oil through the outlet opening (3) and to guide the diverted flow into the log washer, to clean the diverted flow from process wastes through the process oil, and to convey the cleaned aluminium silicate powder back into the inlet opening (2) of drum (1) together with process oil for conversion.

7. Device according to claim 6, wherein the inlet opening (2) and the outlet opening (3) are arranged on hubs of the drum (1), wherein the inlet opening (2) of the drum (1) has a rotating screw with a perimeter that lines up with a perimeter of the inlet opening (2).

8. Device according to claim 6 or 7, wherein slightly curved convex transporting or lifting bars (9) are provided in the direction of the rotation of the drum (1), wherein the transporting or lifting bars (9) are mounted on the inside of the drum (1) and preferably have interruptions (8).

9. Device according to claim 8, wherein the transporting or lifting bars (9) consist of a highly temperature resistant, highly acid resistant, and highly abrasion resistant alloy.

10. Device according to claim 9, **characterized in** a number of turns of the transporting or lifting bars (9) of 24 to 36.

11. Device according to one of claims 7 to 10, wherein the drum (1) has an inner sheath and an outer sheath with a gap between the inner sheath and the outer sheath, wherein the further openings (4, 5) communicate with the gap for transiting the exhausts.

12. Device according to claim 11, wherein the inner sheath consist of a highly temperature resistant, highly acid resistant, and highly abrasion resistant alloy and the outer sheath consists of high-grade steel.

13. Device according to one of claims 7 to 10, wherein tubes are provided passing through the inner chamber of the drum (1) and communicating with the two further openings (4, 5) for transiting the exhausts.

14. Device according to claim 13, wherein the tubes consist of a highly temperature resistant, highly acid resistant, and highly abrasion resistant alloy.

15. Device according to one of claims 7 to 10, wherein the transporting or lifting bars (9) have profiles gas-tightly finishing with the inner chamber of the drum (1), wherein the profiles are communicating with the two further openings (4, 5) for transiting the exhausts.

16. Device according to one of claims 11 to 15, wherein one of the further openings (4) is communicating with an exhaust tube of the heat engine for transiting the exhausts through the tubes.

17. Device according to claim 16, wherein the other one of the further openings (5) for transiting the exhausts through the tubes is communicating with an apparatus for gathering distilled water from aqueous vapour.

18. Device according to claim 16 or 17, wherein the flow cross-section of a communicating chamber between the further openings (4, 5) for transiting the exhausts through the tubes is bigger then the smallest flow cross-section of the exhaust tube of the gas turbine.

19. Device according to one of claims 7 to 18, wherein the inlet opening (2) is an inner hub opening (2) which has the screw and which communicates with a container (7) for organic recycling products, and wherein the outlet opening (3) is another inner hub opening (3) which communicates with a fractionation column and an inlet of the gas turbine.

20. Device according to claim 19, wherein the screw is disposed in the inlet opening (2) for conveying the organic recycling products into the drum (1), and wherein the outlet opening (3) is disposed for guiding the oil mist out of the drum (1) into the fractionation column and the heat engine.

21. Device according to one of claims 7 to 20, wherein the rotating screw in the inlet opening (2) consists of ceramic.

22. Device according to one of claims 7 to 20, wherein a cell wheel lock is arranged in front of the inlet opening (2) in the direction of the container (7) for organic recycling products, the cell wheel lock consisting of two rotatable plates enclosing tubes and respectively having a cut-out, wherein the plates of the cell wheel lock are disposed such that the one plate disposed in the direction of the container (7) shows its cut-out for the introduction of recycling products and may be locked thereafter, and that the other plate disposed in the direction of the inlet opening shows its cut-out thereafter and at the same time a CO₂-overpressure may be generated.

## Revendications

1. Procédé destiné à convertir des matières organiques de récupération en vapeur d'huile laquelle constitue une base permettant d'obtenir notamment des carburants, ladite conversion étant effectuée en mettant en oeuvre une dépolymérisation catalytique réalisée à 320 à 380 °C en absence d'oxygène, et le catalyseur utilisé pour ladite dépolymérisation catalytique étant une poudre de silicate d'aluminium,
ladite conversion étant effectuée dans une chambre de conversion au sein d'un tambour (1) lequel est chauffé par les gaz d'échappement d'un moteur thermique et dont la face intérieure est constituée d'un alliage présentant une haute résistance thermique, une haute résistance aux acides et une haute résistance à l'abrasion et lequel tourne lentement,
le tambour (1) présentant une entrée (2) et une sortie (3),
le tambour (1) comportant deux ouvertures supplémentaires (4, 5) et un système permettant de faire passer les gaz d'échappement du moteur thermique destinés au chauffage à travers le tambour (1) sans que lesdits gaz d'échappement pénètrent dans ladite chambre de conversion du tambour (1),
ladite poudre de silicate d'aluminium étant transportée lentement, ensemble avec les matières organiques de récupération, à travers le tambour (1), et
la poudre de silicate d'aluminium contaminée par les résidus de traitement étant évacuée, ensemble avec de l'huile de traitement, de manière à quitter le tambour (1) par la sortie (3), et le flux ainsi évacué étant introduit dans un désintégrateur pour y être nettoyé desdits résidus de traitement au moyen de ladite huile de traitement, et la poudre de silicate d'aluminium ainsi nettoyée étant réintroduite, ensemble avec de l'huile de traitement, dans l'entrée (2) du tambour (1) destiné à ladite conversion.

2. Procédé selon la revendication 1, un additif en poudre étant présent pour empêcher que la poudre de catalyseur ne reste collée aux parois.

3. Procédé selon la revendication 2, ledit additif étant un minéral.

4. Procédé selon la revendication 1, ledit moteur thermique étant une turbine à gaz entraînant un générateur, ledit procédé comportant les étapes consistant à faire fonctionner ladite turbine à gaz au moyen d'une vapeur d'huile produite par un procédé selon la revendication 1.

5. Procédé selon la revendication 4, les gaz d'échappement de ladite turbine étant mis en oeuvre pour produire de l'eau distillée.

6. Dispositif destiné à la mise en oeuvre d'un procédé de conversion de matières organiques de récupération en vapeur d'huile selon l'une des revendications 1 à 5,
ledit dispositif comprenant un tambour (1) lequel peut être mis en rotation et lequel comporte une chambre de conversion et lequel présente une entrée (2) et une sortie (3), une face intérieure du tambour (1) étant constituée d'un alliage présentant une haute résistance thermique, une haute résistance aux acides et une haute résistance à l'abrasion,
le tambour (1) comportant deux ouvertures supplémentaires (4, 5) et un système permettant de faire passer les gaz d'échappement d'un moteur thermique destinés au chauffage à travers le tambour (1) sans que lesdits gaz d'échappement pénètrent dans ladite chambre de conversion du tambour (1),
ledit dispositif comprenant en outre un système destiné à un processus de désintégration permettant d'évacuer la poudre de silicate d'aluminium contaminée par les résidus de traitement, ensemble avec de l'huile de traitement, de manière à quitter le tambour (1) par la sortie (3), et d'introduire le flux ainsi évacué dans un désintégrateur pour y être nettoyé desdits résidus de traitement au moyen de ladite huile de traitement, et de réintroduire la poudre de silicate d'aluminium ainsi nettoyée, ensemble avec de l'huile de traitement, dans l'entrée (2) du tambour (1) destiné à ladite conversion.

7. Dispositif selon la revendication 6, l'entrée (2) et la sortie (3) étant disposées sur des moyeux du tambour (1), l'entrée (2) vers le tambour (1) étant pourvue d'une vis rotative dont la circonférence correspond à une circonférence de l'entrée (2).

8. Dispositif selon les revendications 6 ou 7, le tambour (1) comportant dans son sens de rotation des nervures de transport et/ou de soulèvement (9) convexes et légèrement recourbées lesquelles sont fixées sur la circonférence intérieure du tambour (1) et présentent préférentiellement des interruptions (8).

9. Dispositif selon la revendication 8, les nervures de transport et/ou de soulèvement (9) étant constituées d'un alliage présentant une haute résistance thermique, une haute résistance aux acides et une haute résistance à l'abrasion.

10. Dispositif selon la revendication 9, **caractérisé en ce que** les nervures de transport et/ou de soulèvement (9) forment 24 à 36 tours hélicoïdaux.

11. Dispositif selon l'une des revendications 7 à 10, le tambour (1) comportant une enveloppe intérieure et une enveloppe extérieure et un espace intermédiaire entre ladite enveloppe intérieure et ladite enveloppe extérieure, les ouvertures supplémentaires (4, 5) destinées à faire passer les gaz d'échappement étant en communication avec ledit espace intermédiaire.

12. Dispositif selon la revendication 11, ladite enveloppe intérieure étant constituée d'un alliage présentant une haute résistance thermique, une haute résistance aux acides et une haute résistance à l'abrasion et ladite enveloppe extérieure étant constituée d'acier inoxydable.

13. Dispositif selon l'une des revendications 7 à 10, pourvu de tubes lesquels s'étendent à travers l'espace intérieur du tambour (1) et lesquels sont en communication avec les deux ouvertures supplémentaires (4, 5) permettant ainsi de faire passer lesdits gaz d'échappement par lesdits tubes.

14. Dispositif selon la revendication 13, lesdits tubes étant constitués d'un alliage présentant une haute résistance thermique, une haute résistance aux acides et une haute résistance à l'abrasion.

15. Dispositif selon l'une des revendications 7 à 10, les nervures de transport et/ou de soulèvement (9) présentant des profils qui assurent leur étanchéité aux gaz vis-à-vis du tambour (1) et lesdits profils étant en communication avec les ouvertures supplémentaires (4, 5) permettant de faire passer lesdits gaz d'échappement par lesdits tubes.

16. Dispositif selon l'une des revendications 11 à 15, l'une (4) des ouvertures supplémentaires lesquelles permettent de faire passer lesdits gaz d'échappement par lesdits tubes étant en communication avec un tuyau d'échappement du moteur thermique.

17. Dispositif selon la revendication 16, l'autre (5) des ouvertures supplémentaires lesquelles permettent de faire passer lesdits gaz d'échappement par lesdits tubes étant en communication avec un système destiné à produire de l'eau distillée à partir de vapeur d'eau.

18. Dispositif selon la revendication 16 ou 17, la section d'écoulement d'un espace de liaison entre les ouvertures supplémentaires (4, 5) lesquelles permettent de faire passer lesdits gaz d'échappement par lesdits tubes étant supérieur à la section d'écoulement minimale dudit tuyau d'échappement de la turbine à gaz.

19. Dispositif selon l'une des revendications 7 à 18, l'entrée (2) étant une ouverture de moyeu intérieure (2) laquelle est présente sur ladite vis et laquelle est en communication avec un récipient (7) contenant des matières organiques de récupération, et la sortie (3) étant une autre ouverture de moyeu intérieure (3) laquelle est en communication avec une colonne de distillation fractionnée et avec une entrée de la turbine à gaz.

20. Dispositif selon la revendication 19, ladite vis située dans l'entrée (2) permettant de transporter les matières organiques de récupération dans le tambour (1) et la sortie (3) permettant de faire passer la vapeur d'huile issue du tambour (1) dans ladite colonne de distillation fractionnée et dans le moteur thermique.

21. Dispositif selon l'une des revendications 7 à 20, ladite vis rotative située dans l'entrée (2) étant constituée d'une matière céramique.

22. Dispositif selon l'une des revendications 7 à 20, un sas rotatif alvéolaire étant disposé en amont de l'entrée (2) et étant orienté vers le récipient (7) lequel contient des matières organiques de récupération et étant constitué de deux disques rotatifs correspondant à la section tubulaire lesquels sont chacun pourvu d'une découpe, les disques du sas rotatif alvéolaire étant disposés tel que le disque faisant face au récipient (7) présente sa découpe pour ainsi admettre les matières organiques de récupération et être refermé après et qu'ensuite l'autre disque faisant face à ladite entrée présente sa découpe tout en permettant de générer une surpression de CO₂ au sein du sas rotatif alvéolaire.
